# EUROPÄISCHE PATENTSCHRIFT

(11) **EP 3 287 304 B1**
(45) Veröffentlichungstag und Bekanntmachung des Hinweises auf die Patenterteilung: **05.06.2019**
(21) Anmeldenummer: 17175605.9
(22) Anmeldetag: 13.06.2017
(51) Int. Cl.: B60C 23/04

(54) **FAHRZEUGLUFTREIFEN, VERFAHREN ZUR ELEKTRONISCHEN AUSSTATTUNG EINES DERARTIGEN FAHRZEUGLUFTREIFENS UND VERFAHREN ZUR NUTZUNG DER ERMITTELTEN DATEN DES FAHRZEUGLUFTREIFENS**
VEHICLE PNEUMATIC TYRE, METHOD FOR ELECTRONIC EQUIPMENT OF SUCH A PNEUMATIC TYRE FOR A VEHICLE AND METHOD FOR USING THE DATA DETERMINED FOR THE PNEUMATIC TYRE
PNEU DE VÉHICULE AUTOMOBILE, PROCÉDÉ POUR ÉQUIPER ÉLECTRONIQUEMENT UN TEL PNEU DE VÉHICULE AUTOMOBILE ET PROCÉDÉ D'UTILISATION DES DONNÉES TRANSMISES DU PNEU DE VÉHICULE AUTOMOBILE

(30) Priorität: 25.08.2016 DE 102016215996
(43) Veröffentlichungstag der Anmeldung: 28.02.2018
(73) Patentinhaber: Continental Reifen Deutschland GmbH, 30165 Hannover (DE)
(72) Erfinder: Kendziorra, Norbert, 30827 Garbsen (DE); Weber, Christian, 30826 Garbsen (DE); Strzelczyk, Matthias, 31515 Wunstorf (DE); Kurz, Martin, 30161 Hannover (DE); Busche, Joachim, 31157 Sarstedt (DE)
(74) Vertreter: Finger, Karsten

(56) Entgegenhaltungen:
- EP-A2- 1 356 957
- WO-A1-2005/113262
- DE-A1- 2 850 787

## Beschreibung

Die Erfindung betrifft einen Fahrzeugluftreifen, ein Verfahren zur elektronischen Ausstattung eines derartigen Fahrzeugluftreifens sowie ein Verfahren zur Nutzung der ermittelten Daten des Fahrzeugluftreifens.

Fahrzeugluftreifen der hier betroffenen Art können sowohl für Zweiräder, als auch für Personenkraftwagen, landwirtschaftliche Fahrzeuge und/oder Lastkraftwagen zum Einsatz kommen. Die Gemeinsamkeit dieser Fahrzeugluftreifen besteht darin, dass diese eine strukturierte Lauffläche aufweisen, deren Struktur in geeigneter Weise an die zu erwartenden Untergründe und Witterungsverhältnisse angepasst ist. Die Lauffläche des Fahrzeugluftreifens geht beidseitig in Seitenwände über, deren Ende jeweils durch einen Reifenwulst gebildet wird. Der Reifenwulst dient der luftdichten Fixierung des aus verschiedenen Gummimischungen zusammengesetzten Teils des Fahrzeugluftreifens an einer Felge eines mit dem Fahrzeugluftreifen ausgestatteten Fahrzeugrades. Die Fahrzeugfelge weist dabei in ebenfalls bekannter Weise korrespondierend zu dem Reifenwulst einen Felgenrand auf, an den sich der Reifenwulst dichtend anlegt, wenn der schlauchlose Fahrzeugluftreifen mit Druckluft befüllt wird, so dass der Fahrzeugluftreifen einen Lufthohlraum ausbildet.
Ein Fahrzeugluftreifen für Kraftfahrzeuge stellt heutzutage ein komplexes System aus einer Vielzahl unterschiedlicher Bauelemente und Werkstoffe dar. So besteht dieser beispielsweise aus verschiedenen Gummimischungen, die sich in ihren Eigenschaften unterscheiden und in die verschiedene Füllstoffe, wie beispielsweise Ruß, eingebracht sind. Um eine Einsparung von Kraftstoffen zu erreichen, wird in zunehmendem Maße eine Reduzierung des Rollwiderstandes der Fahrzeugluftreifen angestrebt. Hierzu werden insbesondere in der Lauffläche die Rußanteile reduziert und gleichermaßen Silikatbestandteile der Gummimischung erhöht.
Silikat, bei dem es sich chemisch betrachtet um Siliziumdioxid (Sio₂) handelt und das auch als "Silica" oder "Kieselsäure" bezeichnet wird, stabilisiert das Netz der Verbindungen zwischen den einzelnen Stoffen einer Gummimischung. Im Vergleich zur herkömmlichen Struktur mit zwei Knoten (Schwefel und Kohlenstoff) erhöht eine auf diese Weise ausgebildete Dreiknoten-Struktur (Schwefel, Kohlenstoff und Silikat) die Festigkeit der Gummimischung, so dass der Rollwiderstand der Lauffläche sinkt.
Die Verwendung von Siliziumdioxid hat jedoch den Nachteil, dass die elektrische Leitfähigkeit des Fahrzeugluftreifens abnimmt, was sich beispielsweise dahingehend negativ auswirkt, dass elektrostatische Aufladungen nicht mehr optimal abgeleitet werden können. Da die elektrostatischen Aufladungen im wesentlichen über die Fahrzeugluftreifen von dem Kraftfahrzeug weg geleitet werden, ist also die Verwendung des weniger oder nur schwach leitfähigen Siliziumdioxids problematisch.

Zur Überwindung dieser, durch Silikateinlagerungen im Gummiwerkstoff hervorgerufenen Wirkungen, ist es beispielsweise aus der DE 10 2010 017 444 A1 bekannt, wenigstens ein fadenförmiges Element vorzusehen, das eine elektrisch leitfähige Beschichtung aufweist. Das fadenförmige Element wird dabei entlang der Oberfläche der Karkasse geführt, so dass eine elektrisch leitende Verbindung zwischen der Lauffläche und dem an der Felge luftdicht anliegenden Reifenwulst gegeben ist, über die elektrostatische Aufladungen abgeführt werden können. Als elektrisch leitfähige Beschichtung des fadenförmigen Elementes schlägt die Schrift beispielsweise einen Haftvermittler mit elektrisch leitfähigen Partikeln vor, wobei die elektrisch leitfähigen Partikel Rußpartikel sein können. Zudem bestehen hierbei auch die Reifenwulste des Fahrzeugluftreifens aus elektrisch leitfähigen Kautschukmischungen. Insgesamt ist es demnach bekannt, elektrostatische Ladungen durch leitfähige Elemente eines Fahrzeugluftreifens abzutransportieren, wobei die Anordnung der leitfähigen Elemente auf der Oberfläche des Fahrzeugluftreifens erhebliche Gefahren in sich birgt, weil beispielsweise bei der Montage oder Demontage des Fahrzeugluftreifens Beschädigungen der leitfähigen Elemente nicht auszuschließen sind.

Für die Fahrzeugsicherheit und zu Überwachungszwecken ist es jedoch wünschenswert, Daten eines Fahrzeugluftreifens im Laufbetrieb zu sammeln. Hierfür schlägt die DE 10 2007 011 906 A1 vor, im Innenraum des Fahrzeugluftreifens, und zwar an dem in die Felge eingebrachten Ventilschaft, eine Sensoreinrichtung zu montieren, die sowohl eine Batterie, als auch eine elektronische Verarbeitungseinheit aufweist, wobei die Batterie und die elektronische Verarbeitungseinheit über eine elektrisch isolierte Stromleitung miteinander verbunden sind. Zu Überwachungszwecken können mit der hierzu geeigneten Sensoreinrichtung beispielsweise der Gasdruck, die Temperatur und die Gasfeuchte im Inneren des Fahrzeugluftreifens ermittelt werden. Die auf diese Weise erfassten Daten werden über eine Funkverbindung an ein im Kraftfahrzeug montiertes Erfassungsgerät übertragen und dort in sinnfälliger Weise ausgewertet beziehungsweise genutzt. In der Druckschrift wird es als nachteilig herausgestellt, derartige Sensoreinrichtungen an oder in einem Fahrzeugreifen, also beispielsweise an der Felge des Fahrzeugluftreifens zu befestigen, da hier die Gefahr besteht, dass sich die Sensoreinrichtung von der entsprechenden Oberfläche löst und sich danach innerhalb des Fahrzeugluftreifens unkontrolliert bewegt. Um diesem Problem entgegenzuwirken wird die Sensoreinrichtung am Ventilschaft befestigt, wobei die vorhandene Stromleitung beim Ablösen der Sensoreinrichtung von dem Ventilschaft zerstört und dadurch die Signalerzeugung unterbrochen wird, was zur Auslösung eines Warnsignals innerhalb des Kraftfahrzeugs genutzt wird. Der Fahrzeugführer ist somit unverzüglich nach dem Ablösen der Sensoreinrichtung in der Lage, auf die geänderte Situation zu reagieren und das Fahrzeug beispielsweise in eine Werkstatt zu überführen. Insgesamt löst eine derartige Ausführung jedoch nicht das Problem, dass sich die Sensoreinrichtung vom Fahrzeugluftreifen lösen kann. Nachteilig ist hierbei außerdem, dass die Batterie nur eine begrenzte Lebensdauer aufweist und folglich zu einem bestimmten Zeitpunkt ausgetauscht werden muss. Weiterhin weist die Sensoreinrichtung auch durch die integrierte Batterie ein verhältnismäßig hohes Gewicht auf, was einen weiteren Nachteil innerhalb des Fahrzeugluftreifens darstellt.

In der DE 2 850 787 A1 wird eine Alarmeinrichtung zur Überwachung des Druckes in Fahrzeugluftreifen vorgestellt, wobei Fühlereinrichtungen an wenigstens einigen der vorhandenen Räder eines Kraftfahrzeuges angeordnet sind, denen jeweils eine Antenne zugeordnet ist. Eine kontinuierliche Drahtschleife dient hierbei der Abgabe der Signale. Die Antenne ist in den Fahrzeugluftreifen integriert. Die Signale werden von einem gemeinsamen Empfänger erfasst, der eine Signalkodierungs- und Alarmschaltung aufweist.

Aus der WO2005 / 113 262 A1 (als Oberbegriff des Anspruchs 1) ist darüber hinaus ein Fahrzeugluftreifen bekannt, bei dem wenigstens eine Leiterbahn und wenigstens ein Halbleiterbauelement und mindestens eine elektronische Schaltung in den Grundwerkstoff des Fahrzeugreifens integriert sind, die der Erfassung und Übertragung von Signalen dienen. Nachteilig ist hierbei, dass mit einer derartigen Lösung nicht unterschiedliche, also komplexe Datenerfassung innerhalb des Fahrzeugluftreifens erfolgen können.

Eine andere Lösung beschreibt die EP 1 356 957 A2. Hier wird ein Fahrzeugluftreifen offenbart, in dessen Lauffläche diverse Sensoreinheiten in Form eines Sensornetzes integriert sind, um verschiedene Betriebsparameter des Fahrzeugluftreifens erfassen zu können. Die von den Sensoren erfassten Werte, bei denen es sich beispielsweise um Druckwerte oder Temperaturwerte handeln kann, werden über fahrzeugfeste Antennen ausgelesen, die an ein Steuergerät angeschlossen sind.

Der Erfindung liegt die Aufgabe zugrunde, einen Fahrzeugluftreifen bereitzustellen, bei dem auf einfache und kostengünstige Weise die Integration von Halbleiterbauteilen, von elektrischen Leiterbahnen und/oder elektronischen Strukturen möglich ist und mindestens ein geeignetes Verfahren anzugeben, das diese elektronischen Strukturen in den Fahrzeugluftreifen einzubringen ermöglicht sowie anzugeben, wie die mit den elektronischen Strukturen ermittelten Daten genutzt werden können.

Die Erfindung löst diese Aufgabenstellung mit den Merkmalen der unabhängigen Patentansprüche 1, 9 und 13.

Weitere Ausgestaltungen der Erfindung sind Gegenstand der sich jeweils anschließenden Unteransprüche.

Ein Fahrzeugluftreifen mit einer entlang seiner Umfangsfläche ein Profil aufweisenden Lauffläche, die beidseitig in je eine Seitenwand übergeht, wobei das untere, luftdicht in eine Felge eines dadurch gebildeten Fahrzeugrades eingesetzte Ende der Seitenwände je einen Reifenwulst aufweist, wurde erfindungsgemäß dahingehend weitergebildet, dass der Fahrzeugluftreifen mehrere Schichten aufweist, in denen jeweils zur Erfassung von Parametern wenigstens eine hierfür geeignete Leiterbahn und/oder wenigstens ein Halbleiterbauelement und/oder mindestens eine elektronische Schaltung in den Grundwerkstoff des Fahrzeugreifens integriert ist.
Grundsätzlich kann eine einzelne Schicht innerhalb des Fahrzeugluftreifens ausreichend sein, mittels der in den Grundwerkstoff integrierten Leiterbahnen und/oder Halbleiterbauelemente und/oder elektronischen Schaltungen die gewünschten oder erforderlichen Parameter des Fahrzeugluftreifens zu erfassen. Als eine Besonderheit der Erfindung ist es jedoch anzusehen, dass der Fahrzeugluftreifen mehrere Schichten aufweist, in denen jeweils mindestens eine Leiterbahn und/oder wenigstens ein Halbleiterbauelement und/oder mindestens eine elektronische Schaltung integriert ist. Auf diese Weise können auf kleinstem Raum sehr kompakte elektrische Verbindungen und Strukturen hergestellt werden, die die Erfassung von Daten des Fahrzeugluftreifens in umfänglichem Maße ermöglichen. Selbstverständlich können auch zwischen den einzelnen Schichten elektrisch leitende Verbindungen hergestellt werden, um beispielsweise Halbleiterbauelemente unterschiedlicher Schichten miteinander zu verbinden beziehungsweise zu kombinieren.
Der Kerngedanke der Erfindung besteht vorliegend darin, die Reifenbauteile selbst als Träger von Halbleiterbauteilen auszuführen und in geeigneter Weise miteinander zu kombinieren. Durch die Integration der genannten Elemente unmittelbar in den Grundwerkstoff des Fahrzeugluftreifens unterliegen diese einer geringeren Belastung, als wenn sie auf die Oberfläche des Fahrzeugluftreifens aufgebracht wären. Durch den Grundwerkstoff des Fahrzeugluftreifens besteht nicht nur ein mechanischer, sondern auch ein thermischer und chemischer Schutz. Das Problem des selbsttätigen Lösens der elektrischen, beziehungsweise elektronischen Elemente kann auf diese Weise vollständig eliminiert werden. Die Verwendung modifizierter Reifenbauteile als Halbleiterstrukturen ermöglicht zudem eine kostengünstige Gewinnung technischer Informationen über die Vorgänge und Verhaltensweisen der einzelnen Bestandteile eines Fahrzeugluftreifens während seiner Lebensdauer.
Hierbei wird weitestgehend auf das Hinzufügen von separaten, aktiven und/oder passiven Bauelementen verzichtet. Die Verbindung von elektrischen oder elektronischen Bauelementen in einem Fahrzeugluftreifen nach der Erfindung erfordert eine elektrische Infrastruktur, die den besonderen Bedingungen im Fahrzeugluftreifen angepasst sein und beispielsweise lokalen Deformationen mit einer hohen Anzahl von Wiederholungen sowie Temperaturbereichen zwischen -50°C bis +200°C widerstehen muss. Für die Verbindung von elektrischen und elektronischen Bauteilen können folglich nur Leiter beziehungsweise Leiterbahnen eingesetzt werden, die beständig gegen hohe, sich oft wiederholende Dehnungen, Stauchungen und Scherbeanspruchungen sind.
Natürlich ist es möglich, bei der vorliegenden Erfindung mit Ruß beschichtete Fäden, Rußdispersionen (Ruß-Tinte, Ruß-Paste, rußhaltige Lösungen), Fäden die mit Rußtinte oder Rußpaste benetzt wurden, leitende (vernetzte) Gummifäden oder ähnliche Elemente einzusetzen. Andere leitende Füllstoffe wie CNT (=Carbon Nano Tubes), Graphen, Graphit oder amorphes Zinnoxid können dabei den Ruß auch teilweise oder vollständig ersetzen.
Ein besonderer Vorteil besteht darüber hinaus darin, bereits im Gummiwerkstoff des Fahrzeugluftreifens vorhandene, textile und metallische Festigkeitsträger direkt oder durch umschlingen mit einer elektrisch leitfähigen Faser oder einer elektrisch leitfähigen Beschichtung, beispielsweise als elektrische Leiterbahnen zu nutzen. Weiterhin sind bereits im Fahrzeugluftreifen vorhandene, elektrisch leitfähige, flächige oder streifenförmige, herkömmliche Unterstrukturen für den erfindungsgemäßen Zweck nutzbar.

In einem Fahrzeugluftreifen gibt es verschiedene Bauteile aus verschiedenen Materialien aus denen der Fahrzeugreifenrohling, beziehungsweise der "ungeheizte Fahrzeugluftreifen", hergestellt wird. Diese Bauteile bilden im fertigen Fahrzeugluftreifen Übergänge zueinander aus. Wenn diese Materialien oder Bauteile entsprechend präpariert sind, das heißt zum Beispiel, aus unterschiedlich dotierten Polymeren bestehen (also p oder n dotiert), so würden sich wie bei aktiven Halleiterbauelementen Übergänge ausbilden, die als elektronische Bauteile genutzt werden könnten. Gemäß einer ersten Ausgestaltung der Erfindung werden daher die Übergänge von in dem Fahrzeugluftreifen vorhandenen, leitfähigen Elementen als p-n-, n-p-, n-p-n- oder p-n-p-Halbleiterübergänge ausgeführt. Auf diese Weise können mit einfachen Mitteln aktive Halbleiterbauelemente in dem Fahrzeugluftreifen generiert werden. Dies betrifft insbesondere die Übergänge von entsprechend modifizierten, leitfähigen Bauteilen des Fahrzeugluftreifens. Der wesentliche Vorteil dieser Lösung besteht darin, dass keine zusätzlichen Bauelemente in den Fahrzeugluftreifen eingefügt werden müssen, sondern diese innerhalb des Fahrzeugluftreifens selbst gebildet werden.

Bei einer geschichteten Aufbringung mehrerer Leiterbahnen beziehungsweise elektronischer Schaltungen können Durchführungen als Übergänge der Leiterbahnen zwischen zueinander benachbarten Schichten erforderlich werden, um die elektrischen Verbindungen zwischen den einzelnen Schichten und den darin vorhandenen elektronischen Schaltungen oder Halbleiterbauelementen herzustellen. Hierfür werden bevorzugt Durchführungen verwendet, die aus Hohlzylindern bestehen, die ihrerseits aus nicht leitenden Werkstoffen gebildet sind, bei denen es sich bevorzugt um Gummiwerkstoffe handelt. Selbstverständlich ist der erwähnte Hohlzylinder nicht als Sonderform, also als Kreiszylinder, zu verstehen, sondern der Hohlzylinder kann im mathematischen Sinne eine beliebige Außenkontur aufweisen, so dass die Querschnittsgeometrie des Hohlzylinders den durch diesen hindurchzuführenden Leiterbahnen geometrisch angepasst ist.

Als Halbleiterbauelemente können gemäß einer speziellen Ausgestaltung der Erfindung zum Beispiel Sensoren, Dioden oder Transistoren Verwendung finden, wobei diese Aufzählung nicht als abschließend zu betrachten ist. Bleibt man beim Beispiel der Dioden oder Transistoren, so ist es möglich, diese beispielsweise als Teil eines Temperatursensors zum Einsatz zu bringen.

Die Leitfähigkeit der zum Einsatz kommenden Leiter kann deutlich geringer, als bei metallischen Leitern ausfallen. Diese Eigenschaft ist in beliebiger Weise durch Veränderung beziehungsweise Anpassung der Stärke und der Breite der Leiterbahnen beeinflussbar, so dass die wenigstens eine Leiterbahn in Abhängigkeit von ihrer Breite und Stärke einen elektrischen Widerstand zwischen 1 Ω / cm und 50 kΩ / cm oder bevorzugt zwischen 10 kΩ / cm und 50 kΩ / cm (sprich: "Ohm / cm" beziehungsweise "Kilo-Ohm / cm") aufweisen kann. Denkbar sind jedoch ebenfalls Bereiche zwischen 1 Ω / cm und 1000 Ω / cm beziehungsweise zwischen 10 Ω / cm und 100 Ω / cm.

Eine besondere Bedeutung hat zudem eine Ausführungsvariante der Erfindung, die darin besteht, dass mehrere, mäanderförmig verlaufende oder sich kreuzende Leiterbahnen vorhanden und gegeneinander isoliert ausgeführt sind. Dabei kann es sich vorzugsweise um leitfähige Fäden aus metallischen Materialien oder Kohlenstofffasern handeln, die auch in Kombination mit anderen Festigkeitsträgern gegen Kompression geschützt werden können. Die mäanderförmige Verlegung der Leiterbahnen führt dazu, dass diese elastisch verformbar bleiben und die Bewegung des Fahrzeugluftreifens mitmachen, ohne dabei zerstört zu werden.
Um Kurzschlüsse zwischen den Leiterbahnen zu verhindern, ist es ferner sinnvoll, eine Isolation vorzusehen. Hierfür eignen sich in besonders vorteilhafter Weise Isolationen zwischen den einzelnen Leiterbahnen, was insbesondere bei sich kreuzenden Leiterbahnen erforderlich ist. Hierzu wird eine dünne Schicht nicht leitendes Material, bei dem es sich bevorzugt um Gummiwerkstoffe handelt, auf die zuvor aufgelegte Leiterbahn aufgebracht, bevor mindestens eine weitere Leiterbahn verlegt wird. Als Beispiel für eine derartige Isolationsschicht sei an dieser Stelle NR-Latex (=Naturkautschuk-Latex) erwähnt. Eine vollständige Integration der Leiterbahnen in isolierende Umhüllungen ist natürlich ebenfalls möglich.

Die Aufbringung der Halbleiterbauelemente und/oder Leiterbahnen und/oder elektronischen Schaltungen ist im erfindungsgemäßen Sinne auf bereits ausvulkanisiertem Gummi möglich.

Ein erfindungsgemäßes Verfahren zur elektronischen Ausstattung eines Fahrzeugluftreifens besteht jedoch darin, mindestens ein Halbleiterbauelement und/oder wenigstens eine Leiterbahn und/oder mindestens eine elektronische Schaltung unmittelbar in den Fahrzeugreifenrohling einzubringen oder unmittelbar auf den Fahrzeugreifenrohling aufzubringen, bevor dessen Fertigstellung durch ein Vulkanisationsverfahren erfolgt. Die elektrisch leitfähigen Strukturen können dabei sowohl direkt, als auch indirekt, beispielsweise mittels eines Transferträgers, auf die Gummioberfläche des Fahrzeugluftreifens aufgetragen werden.

Als eine besonders einfache und daher vorteilhafte Maßnahme hat sich der Einsatz eines Druckverfahrens erwiesen, bei dem die wenigstens eine Leiterbahn und/oder die mindestens eine elektronische Schaltung zwischen zwei Schichten des Fahrzeugreifenrohlings eingebracht oder auf eine Schicht des Fahrzeugreifenrohlings aufgedruckt wird. Mit dieser Vorgehensweise können auch komplexe elektronische Schaltungen bevorzugt computergestützt und in kurzer Zeit realisiert werden.

Das erwähnte Druckverfahren gestaltet sich dabei gemäß einer Weiterbildung des Verfahrens derart, dass die wenigstens eine Leiterbahn und/oder die mindestens eine elektronische Schaltung vor ihrer Verbindung mit dem Fahrzeugreifenrohling aus einer Tinte oder einer Paste besteht, die kontaktlos mittels einer Tintenstrahl-Drucktechnik auf den Fahrzeugreifenrohling aufgebracht wird. Die Tintenstrahl-Drucktechnik ist technisch ausgereift und damit wirtschaftlich einsetzbar. Zudem ist damit ein kontaktloses Aufbringen der Strukturen auf den Gummiwerkstoff möglich.

Alternativ hierzu geht ein Vorschlag der Erfindung dahin, dass die wenigstens eine Leiterbahn und/oder die mindestens eine elektronische Schaltung aus elektrisch leitfähigen Fasern oder Fäden oder aus einer mit Fäden oder Fasern beschichteten Leitschicht bestehen, die manuell oder automatisiert auf die Oberfläche des Fahrzeugreifenrohlings aufgebracht werden. Der Einsatz eines Manipulators, also einer mechanischen Vorrichtung zum Auftragen oder Aufbringen der Leitschicht, ist dabei möglich. Durch die adhäsiven Eigenschaften des Gummiwerkstoffes eines Fahrzeugreifenrohlings, des so genannten "grünen Gummis", lassen sich die Fasern beziehungsweise Fäden leicht aufbringen und bleiben an ihrer Position haften, ohne dass es zusätzlicher Haftmittel oder Haftvermittler bedarf.

Die von dem mindestens einen Halbleiterbauelement erfassten Signale werden gemäß einem erfindungsgemäßen Verfahren durch Funksignale an eine Auswerteeinrichtung des mit dem Fahrzeugluftreifen ausgestatteten Kraftfahrzeugs übertragen und zur Informationssammlung, für statistische Auswertungen, zur Lebensdauererfassung des Fahrzeugluftreifens oder für weitere elektronische Auswertesysteme des Kraftfahrzeuges verwendet. Hier gibt es keine Begrenzung hinsichtlich der Funktechnologie. Bei Reifensensoren werden beispielsweise 433 MHz mit im Automobilbereich standardisierten Protokollen benutzt. Ebenso können jedoch auch Funktechnologien, wie "Bluetooth" oder andere eingesetzt werden.

Dabei ist die unmittelbare Übertragung der erfassten Signale des Fahrzeugluftreifens an eine elektronische Verarbeitungseinheit möglich. Alternativ hierzu besteht jedoch auch die Möglichkeit, die Signale an einen CAN-Bus zu übertragen.

Die vorliegende Erfindung ist natürlich nicht auf Fahrzeugluftreifen beschränkt. Vielmehr kann sie zum Beispiel auch in Transportbändern, Gummilagern, Schläuchen aus Gummi, Dichtungen aus Gummi, Platten (auch mit strukturierter Oberfläche) aus Gummi oder aus einem Elastomer angewendet werden.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: im Schnitt einen perspektivischen Blick auf einen Teil eines Fahrzeugluftreifens,
- Figur 2:: ein Beispiel für die kreuzweise Verlegung elektrischer Leiterbahnen innerhalb des Grundwerkstoffes des Fahrzeugluftreifens,
- Figur 3:: den Schnittverlauf III-III aus Figur 2
und
- Figur 4:: ein mit einem erfindungsgemäßen Fahrzeugluftreifen ausgestattetes Kraftfahrzeug.

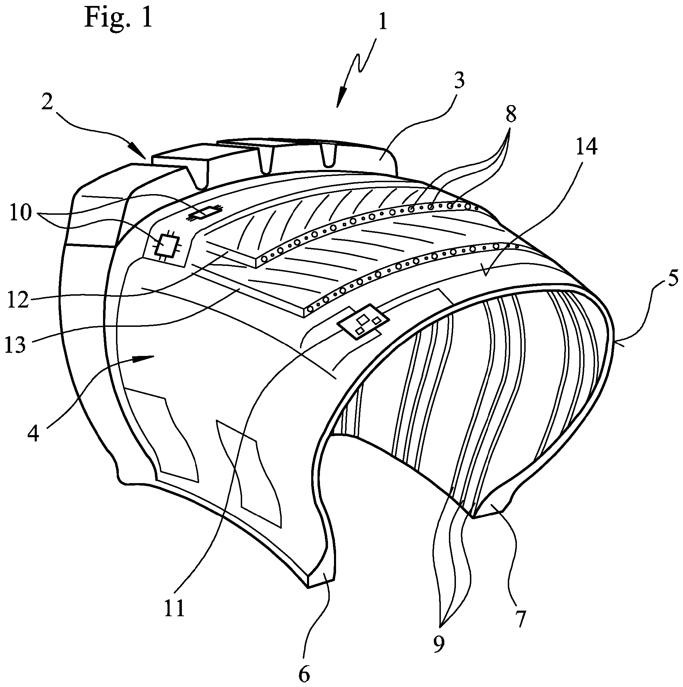

Der in der Figur 1 gezeigte Schnitt eines Fahrzeugluftreifens 1 ist beispielhaft für die Möglichkeiten, die mit der erfindungsgemäßen Lösung an einem Fahrzeugluftreifen 1 ausführbar sind. So besteht der dargestellte Fahrzeugluftreifen 1 zunächst in an sich bekannter Weise aus einer Lauffläche 3, in die ein Profil 2 eingebracht ist, dass die Laufeigenschaften des Fahrzeugluftreifens 1 auf dem Untergrund wesentlich beeinflusst. Seitlich der Lauffläche 3 geht der Fahrzeugluftreifen 1 beidseitig in je eine Seitenwand 4 und 5 über, die in ihrem unteren Bereich jeweils einen Reifenwulst 6 beziehungsweise 7 bildet. Der Reifenwulst 6, 7 dient dabei in an sich bekannter Weise dazu, den Fahrzeugluftreifen 1 dichtend in eine Felge eines dadurch gebildeten Fahrzeugrades einzusetzen, so dass eine Abdichtung gegenüber der Umgebung gebildet wird und in den inneren Hohlraum des Fahrzeugluftreifens 1 Druckluft eingebracht werden kann. Der in Figur 1 gezeigte Fahrzeugluftreifen 1 stellt teilweise einen noch unfertigen Fahrzeugreifenrohling dar, so dass dadurch Leiterbahnen 8 und 9 erkennbar sind. Die Leiterbahnen 8, 9 sind hierbei in verschiedene Schichten 12, 13 und 14 beziehungsweise Lagen des Fahrzeugluftreifens 1 eingebracht und vollständig von einem Gummiwerkstoff umschlossen. Durch die Integration der Leiterbahnen 8, 9 in den Gummiwerkstoff wird zugleich eine Isolierung der Leiterbahnen gegeneinander erreicht, so dass diese in beliebiger Weise innerhalb des Grundwerkstoffes des Fahrzeugluftreifens 1 verlegt und miteinander verschaltet werden können. Diese Leiterbahnen 8, 9 bilden zumindest teilweise Übergänge von in dem Fahrzeugluftreifen 1 vorhandenen, leitfähigen Elementen als p-n-, n-p-, n-p-n- oder p-n-p-Halbleiterübergänge. Neben diesen technischen Möglichkeiten ist in der Figur 1 ferner angedeutet, dass in oder auf die einzelnen Schichten 12, 13, 14 des Fahrzeugluftreifens 1 auch separate Halbleiterbauelemente 10 und/oder elektronische Schaltungen 11 eingebracht beziehungsweise aufgebracht werden können. Um auch eine Verschaltung der elektronischen Bauelemente 10, 11 zwischen den einzelnen Schichten 12-14 vornehmen zu können, sind in der Figur 1 nicht dargestellte, hohlzylinderförmige Durchführungen aus nicht leitenden Werkstoffen vorhanden.

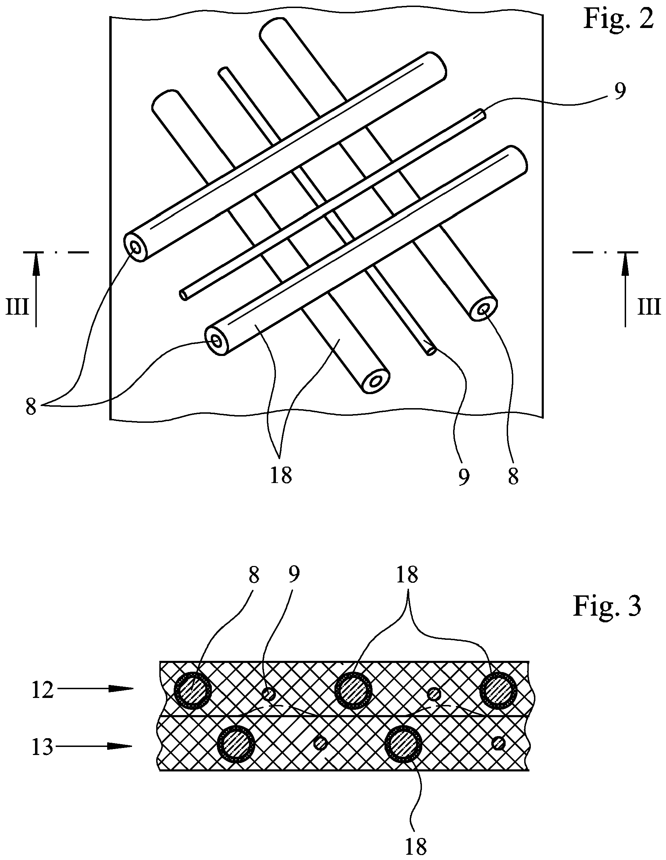

Die Figur 2 zeigt beispielhaft eine Möglichkeit der Verlegung der Leiterbahnen 8, 9 innerhalb des Fahrzeugluftreifens 1. Dabei wird erkennbar, dass beispielsweise die Leiterbahnen 9 als nicht isolierte Leiterbahnen unmittelbar in den Grundwerkstoff Gummi des Fahrzeugluftreifens 1 eingegossen sind. Eine andere Möglichkeit besteht darüber hinaus darin, einzelne oder sämtliche Leiterbahnen 8 mit einer Isolierung 18 auszustatten und diese Leiterbahnen 8 in den Grundwerkstoff des Fahrzeugluftreifens 1 einzufügen. Insbesondere durch die Isolierung 18 ist sogar eine kreuzweise Verlegung der Leiterbahnen 8, 9 möglich, ohne dass es zu Kurzschlüssen beziehungsweise unerwünschten elektrischen Verbindungen kommt.

Die Figur 3 stellt den Schnittverlauf III-III aus Figur 2 dar, so dass hier noch einmal der Unterschied zwischen den mit einer Isolierung 18 ausgestatteten Leiterbahnen 8 und den unmittelbar in den Grundwerkstoff des Fahrzeugluftreifens 1 eingebetteten Leiterbahnen 9 erkennbar wird. Durch die kreuzweise Verlegung der Leiterbahnen 8, 9 beziehungsweise die Gestaltung der Leiterbahnen 8, 9 mit unterschiedlichen Querschnitten kann auch der Belastung der Leiterbahnen durch die Bewegung des Fahrzeugluftreifens 1 entgegengewirkt werden, so dass dadurch Beschädigungen der Leiterbahnen 8, 9 vermeidbar sind.

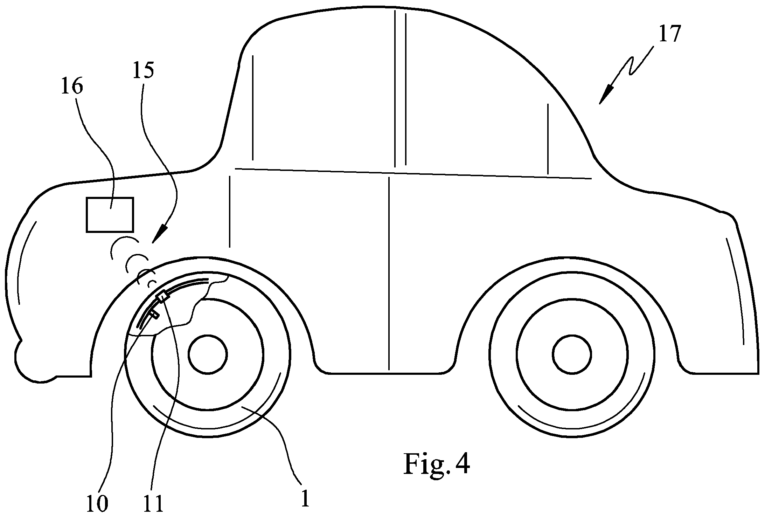

In der Figur 4 ist in schematisch stark vereinfachter Darstellung ein Kraftfahrzeug 17 gezeigt, bei dem die am Fahrzeugluftreifen 1 ermittelten Daten mittels eines Funksignals 15 an eine in dem Kraftfahrzeug 17 vorhandene Auswerteeinrichtung 16 übertragen werden, wo sie einer geeigneten Weiterverarbeitung unterliegen. Lediglich andeutungsweise sind in dem in Figur 4 gezeigten Fahrzeugluftreifen 1 eine elektronische Schaltung 11 sowie ein Halbleiterbauelement 10 dargestellt.

### Bezugszeichenliste

- 1: Fahrzeugluftreifen
- 2: Profil
- 3: Lauffläche
- 4: Seitenwand
- 5: Seitenwand
- 6: Reifenwulst
- 7: Reifenwulst
- 8: Leiterbahn
- 9: Leiterbahn
- 10: Halbleiterbauelement
- 11: elektronische Schaltung
- 12: Schicht
- 13: Schicht
- 14: Schicht
- 15: Funksignal
- 16: Auswerteeinrichtung
- 17: Kraftfahrzeug
- 18: Isolierung

## Patentansprüche

1. Fahrzeugluftreifen (1) mit einer entlang seiner Umfangsfläche ein Profil (2) aufweisenden Lauffläche (3), die beidseitig in je eine Seitenwand (4, 5) übergeht, wobei das untere, luftdicht in eine Felge eines dadurch gebildeten Fahrzeugrades eingesetzte Ende der Seitenwände (4, 5) je einen Reifenwulst (6, 7) aufweist, **dadurch gekennzeichnet, dass**
der Fahrzeugluftreifen (1) mehrere Schichten (12, 13, 14) aufweist, in denen jeweils zur Erfassung von Parametern wenigstens eine hierfür geeignete Leiterbahn (8, 9) und/oder wenigstens ein Halbleiterbauelement (10) und/oder mindestens eine elektronische Schaltung (11) in den Grundwerkstoff des Fahrzeugreifens (1) integriert ist.

2. Fahrzeugluftreifen nach Anspruch 1,
**dadurch gekennzeichnet, dass**
die Übergänge von in dem Fahrzeugluftreifen (1) vorhandenen, leitfähigen Elementen als p-n-, n-p-, n-p-n- oder p-n-p-Halbleiterübergänge ausgeführt sind und dadurch Halbleiterbauelemente (10) generiert sind.

3. Fahrzeugluftreifen nach Anspruch 1 oder 2,
**dadurch gekennzeichnet, dass**
innerhalb einer Schicht (12, 13, 14) des Fahrzeugluftreifens (1) mehrere Leiterbahnen (8, 9) und/oder Halbleiterbauelemente (10) und/oder elektronische Schaltungen (11) integriert sind.

4. Fahrzeugluftreifen nach einem der vorstehend genannten Ansprüche,
**dadurch gekennzeichnet, dass**
bei schichtweiser Anordnung der Leiterbahnen (8, 9) und/oder der Schaltungen (11) als Übergänge der Leiterbahnen (8, 9) zwischen zwei einander abwechselnden Schichten (12, 13, 14) hohlzylinderförmige Durchführungen aus nichtleitenden Werkstoffen vorhanden sind.

5. Fahrzeugluftreifen nach einem der vorstehend genannten Ansprüche,
**dadurch gekennzeichnet, dass**
die Halbleiterbauelemente (10) Sensoren, Dioden oder Transistoren sind.

6. Fahrzeugluftreifen nach einem der vorstehend genannten Ansprüche,
**dadurch gekennzeichnet, dass**
die wenigstens eine Leiterbahn (8, 9) in Abhängigkeit von ihrer Breite und Stärke einen elektrischen Widerstand zwischen 1 Ω/cm und 50 kΩ/cm aufweist.

7. Fahrzeugluftreifen nach einem der vorstehend genannten Ansprüche,
**dadurch gekennzeichnet, dass**
die wenigstens eine Leiterbahn (8, 9) in Abhängigkeit von ihrer Breite und Stärke einen elektrischen Widerstand zwischen 10 Ω/cm und 50 kΩ/cm aufweisen.

8. Fahrzeugluftreifen nach einem der vorstehend genannten Ansprüche,
**dadurch gekennzeichnet, dass**
mehrere, mäanderförmig verlaufende oder sich kreuzende Leiterbahnen (8, 9) vorhanden und gegeneinander isoliert ausgeführt sind.

9. Verfahren zur elektronischen Ausstattung eines Fahrzeugluftreifens nach einem der vorstehend genannten Ansprüche,
**dadurch gekennzeichnet, dass**
mindestens ein Halbleiterbauelement (10) und/oder wenigstens eine Leiterbahn (8, 9) und/oder mindestens eine elektronische Schaltung (11) in den Fahrzeugreifenrohling eingebracht oder auf den Fahrzeugreifenrohling aufgebracht wird oder werden, bevor dessen Fertigstellung durch ein Vulkanisationsverfahren erfolgt.

10. Verfahren nach Anspruch 9,
**dadurch gekennzeichnet, dass**
die wenigstens eine Leiterbahn (8, 9) und/oder die mindestens eine elektronische Schaltung (11) mittels eines Druckverfahrens zwischen zwei Schichten (12, 13, 14) des Fahrzeugreifenrohlings eingebracht oder auf eine Schicht (12, 13, 14) des Fahrzeugreifenrohlings aufgebracht wird beziehungsweise werden.

11. Verfahren nach Anspruch 9 oder 10,
**dadurch gekennzeichnet, dass**
die wenigstens eine Leiterbahn (8, 9) und/oder die mindestens eine elektronische Schaltung (11) vor ihrer Verbindung mit dem Fahrzeugreifenrohling aus einer Tinte oder einer Paste besteht, die kontaktlos mittels einer Tintenstrahl-Drucktechnik auf den Fahrzeugreifenrohling aufgebracht wird.

12. Verfahren nach Anspruch 11,
**dadurch gekennzeichnet, dass**
die wenigstens eine Leiterbahn (8, 9) und/oder die mindestens eine elektronische Schaltung (11) aus elektrisch leitfähigen Fäden oder aus mit einer Leitschicht beschichteten Fäden bestehen, die manuell oder automatisiert auf die Oberfläche des Fahrzeugreifenrohlings aufgebracht werden.

13. Verfahren zur Nutzung der von einem Fahrzeugluftreifen (1) nach einem der Ansprüche 1 bis 8 und mittels eines Verfahrens nach den Ansprüchen 9 bis 12 ausgestatteten Fahrzeugluftreifens (1) stammenden Signale,
**dadurch gekennzeichnet, dass**
die von dem mindestens einen Halbleiterbauelement (10) erfassten Signale durch Funksignale (15) an eine Auswerteeinrichtung (16) des mit den Fahrzeugluftreifen (1) ausgestatteten Kraftfahrzeugs (17) übertragen und zur Informationssammlung, für statistische Auswertungen, zur Lebensdauererfassung des Fahrzeugluftreifens (1) oder für weitere elektronische Auswertesysteme des Kraftfahrzeuges (17) verwendet werden.

14. Verfahren nach Anspruch 13,
**dadurch gekennzeichnet, dass**
die Signale an einen CAN-Bus übertragen werden.

## Claims

1. Vehicle pneumatic tyre (1) with a tread (3), which has a profile (2), along its circumferential face, which tread merges on either side with a respective side wall (4, 5), wherein the lower end of the side walls (4, 5), which lower end is inserted in an air-tight manner into a rim of a vehicle wheel which is formed as a result, has a respective tyre bead (6, 7),
**characterized in that**
the vehicle pneumatic tyre (1) has a plurality of layers (12, 13, 14) into each of which, for the purpose of detecting parameters, at least one conductor track (8, 9) which is suitable for this purpose and/or at least one semiconductor component (10) and/or at least one electronic circuit (11) are/is integrated into the base material of the vehicle tyre (1).

2. Vehicle pneumatic tyre according to Claim 1, **characterized in that**
the junctions of conductive elements which are present in the vehicle pneumatic tyre (1) are designed as p-n, n-p, n-p-n or p-n-p semiconductor junctions and semiconductor components (10) are generated as a result.

3. Vehicle pneumatic tyre according to Claim 1 or 2, **characterized in that**
a plurality of conductor tracks (8, 9) and/or semiconductor components (10) and/or electronic circuits (11) are integrated within one layer (12, 13, 14) of the vehicle pneumatic tyre (1).

4. Vehicle pneumatic tyre according to one of the preceding claims,
**characterized in that**,
in the case of a layered arrangement of the conductor tracks (8, 9) and/or of the circuits (11), hollow-cylindrical passages composed of non-conductive materials are present as junctions of the conductor tracks (8, 9) between two alternating layers (12, 13, 14) .

5. Vehicle pneumatic tyre according to one of the preceding claims,
**characterized in that**
the semiconductor components (10) are sensors, diodes or transistors.

6. Vehicle pneumatic tyre according to one of the preceding claims,
**characterized in that**
the at least one conductor track (8, 9) has, depending on its width and thickness, an electrical resistance of between 1 Ω/cm and 50 kΩ/cm.

7. Vehicle pneumatic tyre according to one of the preceding claims,
**characterized in that**
the at least one conductor track (8, 9) has, depending on its width and thickness, an electrical resistance of between 10 Ω/cm and 50 kΩ/cm.

8. Vehicle pneumatic tyre according to one of the preceding claims,
**characterized in that**
a plurality of meandering or intersecting conductor tracks (8, 9) are present and are designed in a manner isolated from one another.

9. Method for equipping a vehicle pneumatic tyre according to one of the preceding claims with electronics,
**characterized in that**
at least one semiconductor component (10) and/or at least one conductor track (8, 9) and/or at least one electronic circuit (11) are or is inserted into the vehicle green tyre or applied to the vehicle green tyre, before said method is completed by a vulcanization process.

10. Method according to Claim 9,
**characterized in that**
the at least one conductor track (8, 9) and/or the at least one electronic circuit (11) are or is introduced between two layers (12, 13, 14) of the vehicle green tyre or applied to a layer (12, 13, 14) of the vehicle green tyre by means of a printing process.

11. Method according to Claim 9 or 10,
**characterized in that**
the at least one conductor track (8, 9) and/or the at least one electronic circuit (11) consists of an ink or a paste, which is applied to the vehicle green tyre in a contact-free manner by means of an inkjet printing technique, before it is connected to the vehicle green tyre.

12. Method according to Claim 11,
**characterized in that**
the at least one conductor track (8, 9) and/or the at least one electronic circuit (11) consists of electrically conductive threads or of threads which are coated with a conductive layer, which threads are manually or automatically applied to the surface of the vehicle green tyre.

13. Method of using the signals originating from a vehicle pneumatic tyre (1) according to one of Claims 1 to 8 and by means of a method according to Claims 9 to 12 equipped vehicle pneumatic tyre (1),
**characterized in that**
the signals detected by the at least one semiconductor component (10) are transmitted by radio signals (15) to an evaluation device (16) of the motor vehicle (17) which is equipped with the vehicle pneumatic tyre (1) and are used for collecting information, for statistical evaluation operations, for detecting the service life of the vehicle pneumatic tyre (1) or for further electronic evaluation systems of the motor vehicle (17).

14. Method according to Claim 13,
**characterized in that**
the signals are transmitted to a CAN bus.

## Revendications

1. Pneu de véhicule (1) avec une bande de roulement (3) présentant un profil (2) le long de sa surface périphérique, laquelle se transforme des deux côtés respectivement en une paroi latérale (4, 5), dans lequel l'extrémité inférieure des parois latérales (4, 5) mise en place de manière étanche à l'air dans une jante d'une roue de véhicule ainsi formée présente respectivement un talon de pneu (6, 7),
**caractérisé en ce que** le pneu de véhicule (1) présente plusieurs couches (12, 13, 14) dans lesquelles, pour la détection de paramètres, au moins une piste conductrice (8, 9) adaptée à cet effet et/ou au moins un composant semi-conducteur (10) et/ou au moins un circuit électronique (11) sont respectivement intégrés dans le matériau de base du pneu de véhicule (1).

2. Pneu de véhicule selon la revendication 1, **caractérisé en ce que** les jonctions d'éléments conducteurs présents dans le pneu de véhicule (1) sont réalisées en tant que jonctions semiconductrices p-n, n-p, n-p-n ou p-n-p et que des composants semi-conducteurs (10) sont générés de ce fait.

3. Pneu de véhicule selon la revendication 1 ou 2, **caractérisé en ce qu'**à l'intérieur d'une couche (12, 13, 14) du pneu de véhicule (1), plusieurs pistes conductrices (8, 9) et/ou composants semi-conducteurs (10) et/ou circuits électroniques (11) sont intégrés.

4. Pneu de véhicule selon l'une des revendications mentionnées ci-dessus,
**caractérisé en ce qu'**en cas d'agencement en couches des pistes conductrices (8, 9) et/ou des circuits (11), en guise de jonctions des pistes conductrices (8, 9) entre deux couches (12, 13, 14) alternées, il y a des traversées en forme de cylindre creux en matériaux non conducteurs.

5. Pneu de véhicule selon l'une des revendications mentionnées ci-dessus,
**caractérisé en ce que** les composants semi-conducteurs (10) sont des capteurs, des diodes, ou des transistors.

6. Pneu de véhicule selon l'une des revendications mentionnées ci-dessus,
**caractérisé en ce que** l'au moins une piste conductrice (8, 9) présente, en fonction de la largeur et épaisseur, une résistance électrique comprise entre 1 Ω/cm et 50 kΩ/cm.

7. Pneu de véhicule selon l'une des revendications mentionnées ci-dessus,
**caractérisé en ce que** l'au moins une piste conductrice (8, 9) présente, en fonction de sa largeur et épaisseur, une résistance électrique comprise entre 10 Ω/cm et 50 kΩ/cm.

8. Pneu de véhicule selon l'une des revendications mentionnées ci-dessus,
**caractérisé en ce qu'**il y a plusieurs pistes conductrices (8, 9) s'étendant en forme de méandres ou se croisant et réalisées de manière isolée les unes par rapport aux autres.

9. Procédé pour l'équipement électronique d'un pneu de véhicule selon l'une des revendications mentionnées ci-dessus,
**caractérisé en ce qu'**au moins un composant semi-conducteur (10) et/ou au moins une piste conductrice (8, 9) et/ou au moins un circuit électronique (11) est ou sont intégré(s) dans l'ébauche de pneu de véhicule ou appliqué(s) sur l'ébauche de pneu de véhicule avant le finissage de celui-ci grâce à un procédé de vulcanisation.

10. Procédé selon la revendication 9,
**caractérisé en ce que** l'au moins une piste conductrice (8, 9) et/ou l'au moins un circuit électronique (11) est ou sont introduit(s) au moyen d'un procédé d'impression entre deux couches (12, 13, 14) de l'ébauche de pneu de véhicule ou est ou sont appliqué (s) sur une couche (12, 13, 14) de l'ébauche de pneu de véhicule.

11. Procédé selon la revendication 9 ou 10, **caractérisé en ce que** l'au moins une piste conductrice (8, 9) et/ou l'au moins un circuit électronique (11) se compose, avant sa liaison avec l'ébauche de pneu de véhicule, d'une encre ou d'une pâte appliquée sans contact au moyen d'une technique d'impression par jet d'encre sur l'ébauche de pneu de véhicule.

12. Procédé selon la revendication 11,
**caractérisé en ce que** l'au moins une piste conductrice (8, 9) et/ou l'au moins un circuit électronique (11) se composent de fils électroconducteurs ou de fils revêtus d'une couche conductrice que l'on applique manuellement ou de manière automatisée sur la surface de l'ébauche de pneu de véhicule.

13. Procédé pour l'utilisation des signaux provenant d'un pneu de véhicule (1) selon l'une des revendications 1 à 8 et au moyen d'un procédé selon les revendications 9 à 12 pneu de véhicule (1) équipé,
**caractérisé en ce que** les signaux détectés par l'au moins un composant semi-conducteur (10) sont transmis par signaux radio (15) à un dispositif d'évaluation (16) du véhicule automobile (17) équipé avec les pneus de véhicule (1) et sont utilisés pour la collecte d'informations, pour des analyses statistiques, pour la détection de la durée de vie du pneu de véhicule (1) ou pour d'autres systèmes d'évaluation électroniques du véhicule automobile (17).

14. Procédé selon la revendication 13,
**caractérisé en ce que** les signaux sont transmis à un bus CAN.
